Europäisches Patentamt

(19) European Patent Office   (11) Publication number: **0 185 069**
**B1**
Office européen des brevets

(12)                          **EUROPEAN PATENT SPECIFICATION**

(45) Date of publication of the patent specification:   (51) Int. Cl.⁴: **G 02 B 3/06, F 21 V 5/08**
**01.03.89**

(21) Application number: **85903084.3**

(22) Date of filing: **07.06.85**

(86) International application number:
**PCT/SE 85/00238**

(87) International publication number:
**WO 86/00146 (03.01.86 Gazette 86/1)**

(54) **LIGHT DIFFUSING LENS.**

(30) Priority: **07.06.84 SE 8403074**

(43) Date of publication of application:
**25.06.86 Bulletin 86/26**

(45) Publication of the grant of the patent:
**01.03.89 Bulletin 89/9**

(84) Designated Contracting States:
**AT BE CH DE FR GB IT LI NL SE**

(56) References cited:
**none**

(73) Proprietor: **ERNST GRANSTRÖM AB, Älgstigen 6,
S-731 00 Köping (SE)**

(72) Inventor: **BERGLUND, Stig, Box 10229,
S-100 55 Stockholm (SE)**
Inventor: **GRANSTRÖM, Ernst, Älgstigen 6,
S-731 00 Köping (SE)**

(74) Representative: **Avellan-Hultman, Olle, Avellan-Hultman
Patentbyra AB P.O. Box 5366, S-102 46 Stockholm 5 (SE)**

## Description

The present invention relates to a light-refracting lens for use with optical apparatus in which the intensity of the refracted light varies with the refractive angle and is different in two orthogonal planes comprising the optical axis, and in which a light source projects a beam of rays towards the lens so that one or several images of the light source is formed by the lens, especially so that the refracted light is concentrated within a predetermined angular zone, and in which the lens on one side thereof is formed with one or several non-rotational symmetric calotte-shaped cavities and/or bulgings forming one or more elementary lenses each of which provides one or several light-emitting zones.

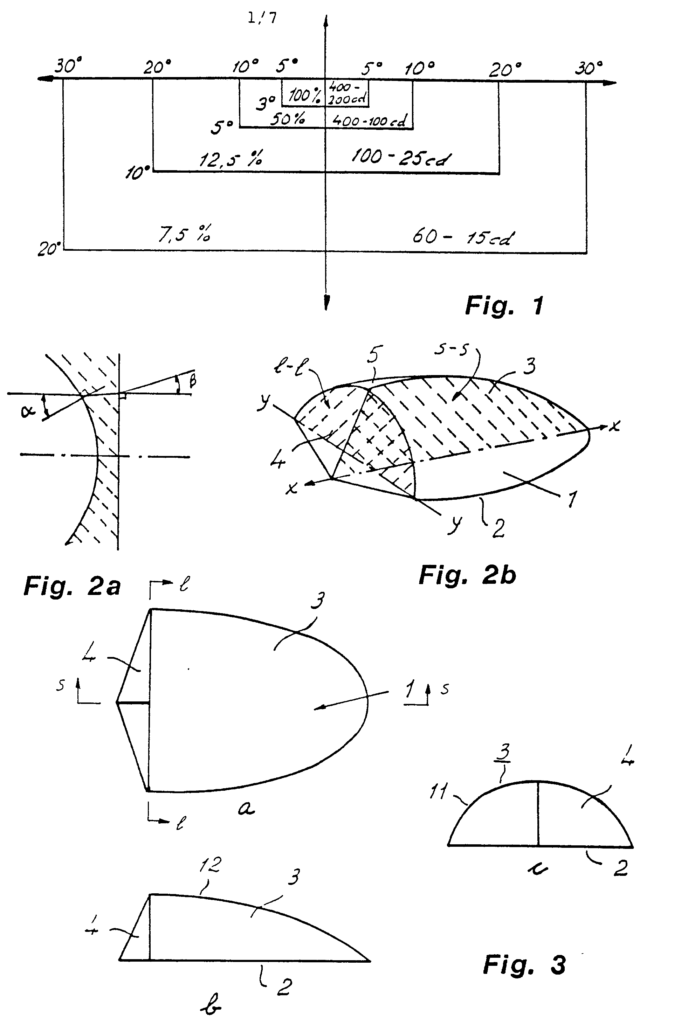

It is known that with traffic signals having modern concentrated light sources the achievement of adequate diffusion of the nearly parallel beam of light reaching the lens via the given parabolic reflector gives rise to difficulties. International standards (CIE 1980) have been laid down concerning the required light distribution (see figure 1), and it can be shown that present traffic signals do not meet the said international standards, especially not where traffic signals have concentrated light sources.

One object of the invention has accordingly been to produce a light refracting lens which produces inter alia the light distribution specified according to the said CIE standard (figure 1), which must be regarded as a minimum requirement for light diffusion in traffic signals. In this connection it is sufficient to take into account the relative levels of light. The absolute levels of light depend on the intensity of the light source.

Another object of the invention has been to produce a lens enabling the energy requirement of the light source to be reduced by designing the lens in such a way that the light is substantially diffused only within the area in which this is necessary, i.e. only below the horizontal level.

The light refracting lens in accordance with the invention consists of one preferably a large number of cooperating nonrotation symmetric elementary lenses which are substantially identical and which are so arranged on the inside of the lens body that their constribution to the light distribution on a remote plane in front of the lens is substantially the same, i.e. that the elementary lenses are substantially orientated in the same way in respect of the incident light. If the light refracting lens is concave, which is normal, the elementary lenses may, as an extreme case, be arranged stepwise with parallel axes and in such a manner that the vertices substantially join so as to form a surface having the radius of curvature of the lens. By way of another extreme case it is also possible to have the axes of the elementary lenses pointing towards the centre of the lens'curvature.

Since the required light distribution is not rotation symmetric the elementary lenses must be non-rotation symmetric. Since light diffusion in an upward direction is neither required nor desired one can in principle make use of half-lenses. If the elementary lenses are concave used is made of the lower half, and if the elementary lenses are convex use is made of the upper half.

The most readily available non-rotation symmetric surface suitable for this purpose are toric surfaces or surfaces constituting section of ellipsoids of revolution. An example thereof is show in the patent US-A-2,907,249, in which the elementary lenses having modified toric elementary surfaces. However, these surfaces are far from providing the required light distribution. In order to bring about the required light distribution a new type of two-axis aspheric toroidal surfaces has come to be introduced, and these will henceforth be referred to as atoric calotte surfaces.

According to the invention the calotte-shaped cavities and/or bulgings are designed as complete or partial two-axis aspheric toroidal calottes, whereby the ratio between the extent of the calotte base along the large axis and along the small axis is about 1.3–1.5.

An atoric surface is so designed as to have, in the same way as a toric surface, two planes of symmetry designated as a rule as the x-plane and the y-plane. Another property which they have in common with toric surfaces consists in the fact that the intersection lines obtained when the atoric surface is intercepted in a plane (p-plane) parallel to the tangential plane at the vertex consists of ellipses (p-ellipses). As regards toric surfaces the rule applies that the intersection lines obtained with planes containing the surface normal at the vertex consist of circular arcs. With atoric surfaces the general rule applies that these intersection lines (axial intersection lines) consist of monotonic functions (functions without maxima and minima).

The atoric surfaces can be classified in different groups. The first group consists of surfaces where the axial intersection lines lack inflexion points. These surfaces are referred to as «atoric. surfaces of the 0th order». In general an atoric surface where all axial intersection lines have n inflexion points is known as an «atoric surface of nth order». By a «regular atoric surface of nth order» is meant an atoric surface of nth order in which the number of inflexion points between two p-planes for different axial intersection lines differs by not more than a unit. By a «harmonic atoric surface of nth order» is meant an atoric surface of nth order where the number of inflexion points between any two p-planes for any different axial random lines is always the same. An «atoric calotte» is a part of an atoric surface located on the side of a p-plane containing the vertex. The said p-plane is known as an «atoric calotte base». An atoric surface is defined entirely by two axial intersection lines, the x-axis and the y-axis. It is advantageous to select two «orthogonal axial intersection lines», i.e. axial intersection lines obtained with two orthogonal planes – advantageously planes containing the x- and y-axes in the Euclidian system of coordinates. The said orthogonal axial intersection lines may in general be any two symmetric functions, both convex or both concave at the vertex these being known as an «atoric x-function» and an «atoric y-function» respectively. As regards the elementary lenses in the light refraction lens it is assumed that the y-axis is substantially located in the horizontal plane.

A general formula for an atoric x-function $f(x)$ is

$$f(x) = cx^2 / [1 + \sqrt{1-(\varkappa-1)c^2x^2}] + \sum_{i=3}^{m} \cdot a_i |x|^i + S(x)$$

(formula 1)

where c is a constant of curvature

$\varkappa$ is a constant of conicity

$a_i$, i between 3 and m, are so-called aspheric constants, and

$S(x)$ is a sum of spline functions.

Atoric y-functions are defined in an analogous way. Normally all $a_i$ are equal to zero or also $S(x)$ is equal to zero. When all $a_i$ are equal to zero and $S(x)$ is equal to zero but $\varkappa$ is different from zero one always obtains atoric surfaces of 0th order. If also $\varkappa$ equals zero both for the x-function and the y-function the result is a toric surface.

To achieve a light distribution of the type shown in figure 1 the large or long axes of the p-ellipses must be located along the x-axis, and the ratio between the large axis and the small axis of each elementary lens should be about 1,3–1,5.

In a first embodiment – type A – shown in figures 2 and 3 the atoric calotte is of 0th order, in a second embodiment – type B – shown in figure 4 the calotte is a regular or harmonic calotte of first order, and in a third embodiment – type C – shown in figure 5 we have a calotte of 3rd order.

With the embodiment type A (atoric calotte without inflexion points) one sees in every elementary lens a light-emitting area which changes its position and appearance as a function of the viewing angle. With the embodiment of type B (atoric calotte with one inflexion zone in the surface of the calotte) one can see, at least from and including viewing angles larger than a certain minimum angle, two different light-emitting areas in every elementary lens, which should be deemed an advantage by comparison with the embodiment type A since the light is distributed more evenly over the surface of the lens. As a result one achieves inter alia the advantage of covered symbols on a traffic signal lens becoming clearer.

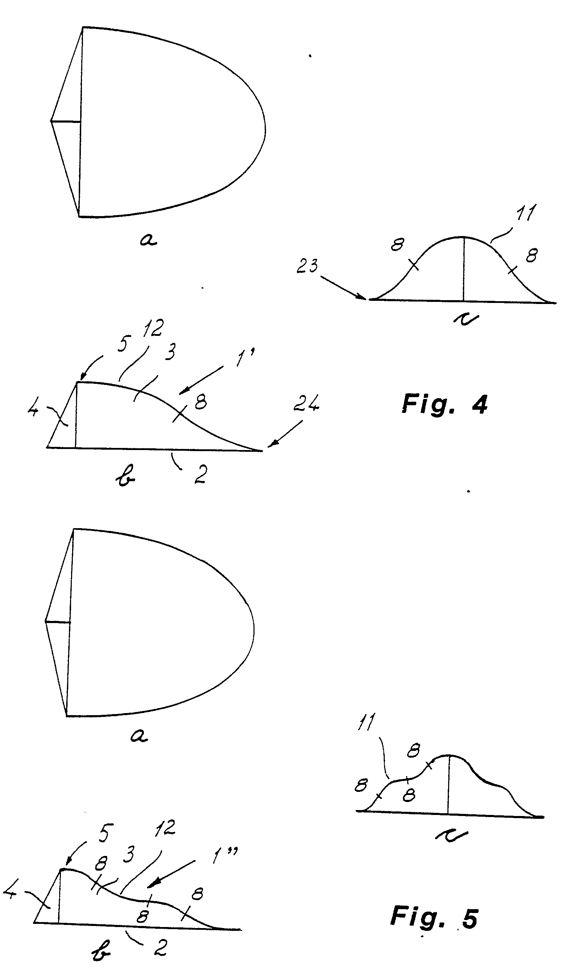

Another advantage of the embodiment according to type B (see figure 4) consists in the fact that an atoric calotte of first order (one inflexion zone per calotte plane) does not have its maximum inclination at the edge of the atoric calotte base, which is the case with the embodiment according to type A, except in the inflexion zone. This entails that with the embodiment according to type B with negative or concave elementary lenses a larger maximum inclination of the axial intersection lines is acceptable than with the embodiment according to type A, without getting interference from adjacent elementary lenses. This also gives rise to production advantages inasmuch as more obtuse angles are achieved at the junctions between the various elementary lenses. Interference between two adjacent elementary lenses means that light from one lens passes into the other lens. This can cause problems already for the substantially parallel light coming via the parabolic reflector. The phenomenon becomes more accentuated as regards the light direct from the light source as well as in the case that when the light refraction surface of the elementary lens is rough, it may incidentally be desirable since it produces a further diffusion of the light over the surface of the lens.

An atoric calotte of third order – type C – such as shown in figure 5 yields in its turn and from certain viewing angles up to four light-emitting areas per calotte surface, which contributes to a more even light distribution over the surface of the traffic signal. One advantage of negative or concave elementary lenses consists in the fact that with identical strength requirements less material is required, and as the above comment on interference between adjacent elementary lenses indicates the use of concave lenses is facilitated if they are designed in accordance with type B or possibly type C.

The maximum inclination ($\alpha$) with the y- or x-function can, if the largest viewing angle ($\beta$) in the horizontal or vertical direction is known, be simply calculated using a formula as such known, the designations being as shown in figure 2a of the drawings:

$$\alpha = \pm \arctg(\sin(\beta)/(n \cdot \cos(\arcsin(\sin(\beta)/n))-1))$$

(formula 2)

So as to be able to achieve a light distribution of the type shown in figure 1 it is necessary with the embodiment according to type A that the y-function of the atoric calotte base has an inclination of not less than about 50°. To avoid, with reference to parallel incident light interference between adjacent elementary lenses the same inclination must not exceed 60° if the elementary lenses are concave. This is a condition affecting the choice of parameters in formula 1. Another condition consists in the «atoric calotte height», i.e. the distance along the surface normal at the vertex from the atoric calotte base. For practical reasons the calotte height should not be higher than about 0.5 times the «atoric calotte width», i.e. the extent of the atoric calotte base along the y-axis. From a functional point of view it is not advisable for the atoric calotte height to be less than 0.2 times the atoric calotte width. With practical embodiments factors in the range 0.25–0.30 have been found suitable.

In practice it has proved that the ratio between the extent of the calotte base along the large axis (x–x in figure 1) and the small axis (y–y in figure 1) should be about 1.3–1.5, whereas the calotte height advantageously has a value of 0.2–0.5 or preferably 0.25–0.30 in relation to the extent of the calotte base along the small axis (y–y).

The maximum inclination of an intersection line in relation to the plane in which the light refraction is highest, subsequently referred to as the l-plane should, with lenses having a refraction index of for instance 1.4–1.6 be preferably 40–60°, and the ratio between the maximum inclination of the intersection line between the plane where the light refraction is lowest, subsequently referred to as the s-plane, and the maximum inclination of an intersection line in relation to the l-plane should be about 0.7–0.8.

As regards the atoric x-function the rule correspondingly applies that the inclination at the edge of the calotte base should be at least 40°. With the embodiment type A there are therefore two conditions for both the atoric y-functions and the atoric x-function, i.e. on the one hand the inclination at the calotte base and on the other hand also the condition concerning the ratio between calotte height and calotte width, which in the case where in formula 1 all $a_i=0$ and S is equal to zero substantially determines the two remaining parameter values c and $\varkappa$.

For solutions as regards type B and type C embodiments the same conditions apply in respect of the calotte height as with type A, however the minimum value of the maximum inclination is in this case governed by the inflexion points of the x- and y-functions, where in this case the inclinations are after all largest.

A hybrid embodiment (type D) is also feasible, where the atoric x-function has no inflexion points whereas the atoric y-function has an inflexion point or vice versa (type E).

By choosing atoric surfaces of higher orders than the first order, i.e. surfaces with several inflexion points, it is possible to achieve several light-emitting zones with each elementary lens thus further evening out the distribution of light over the surface of the lens. In practice it should however be sufficient not to go beyond atoric calottes of the first or possibly the third order.

The invention will now be described in greater detail with reference to the attached drawings. It should, however, be noted that the invention is not limited to the embodiments shown in the drawings and described in the text but that these should be regarded only as illustrative examples.

In the drawings figure 1 shows, as previously discussed, a schematic presentation of the standard recommended by CIE (1980) concerning the distribution of light with a red traffic signal.

Figure 2a diagrammatically illustrates the maximum inclination (α) with the y- or x-functions for a given largest viewing angle (β) in the horizontal or vertical direction.

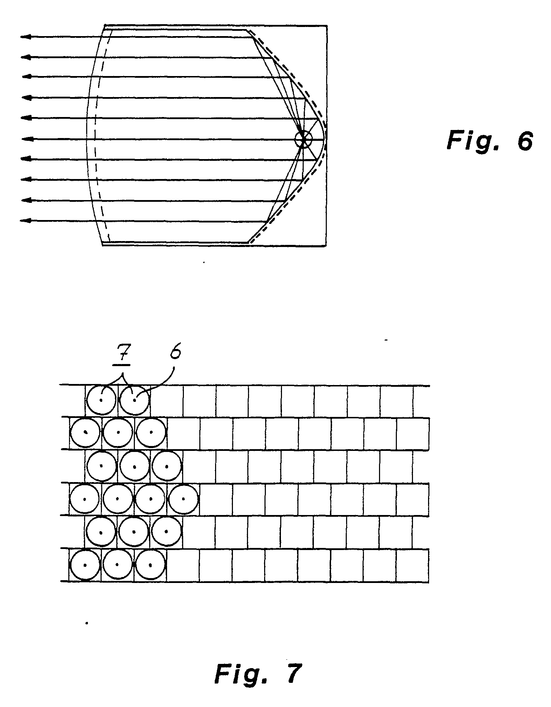

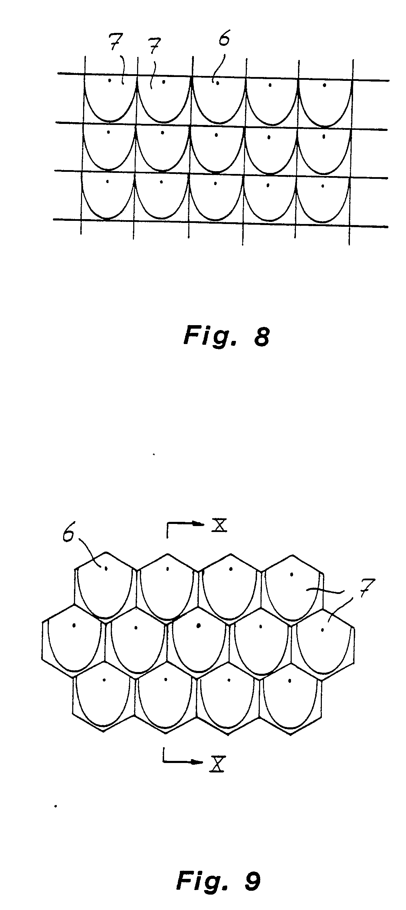

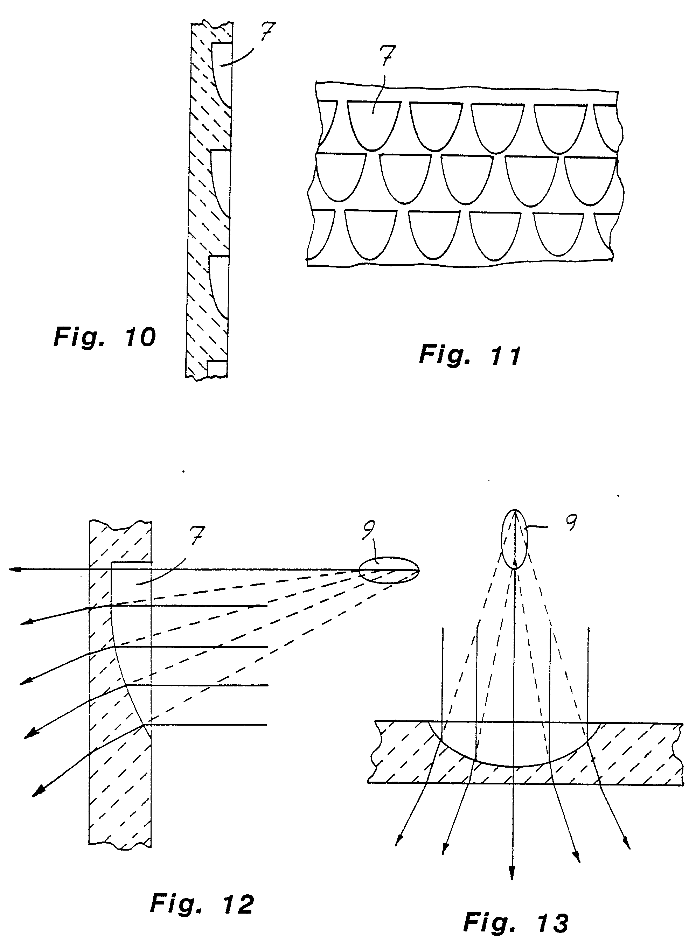

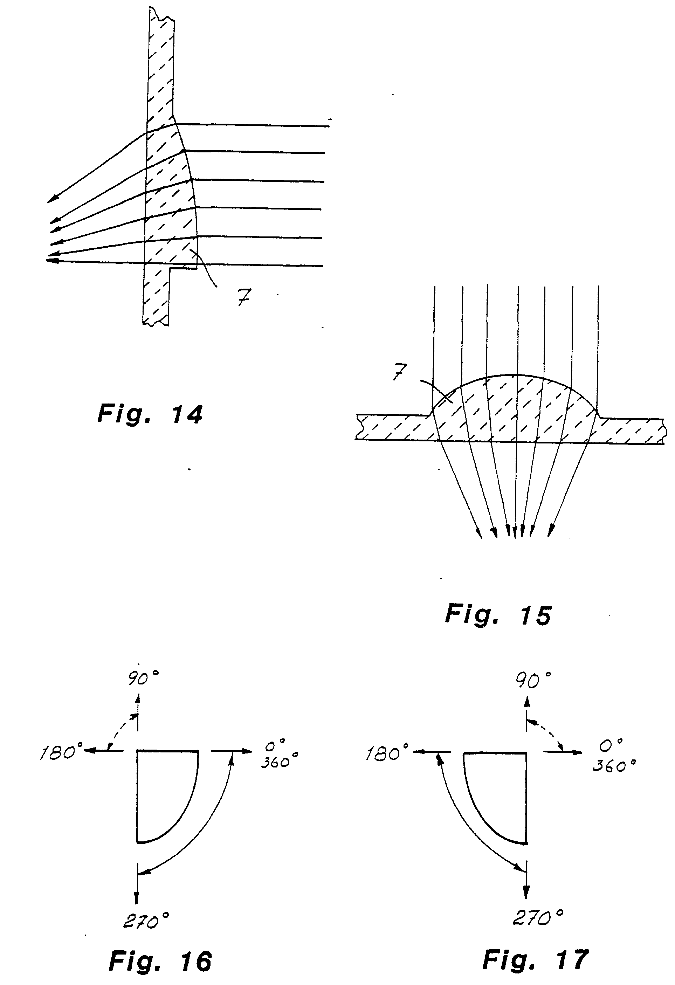

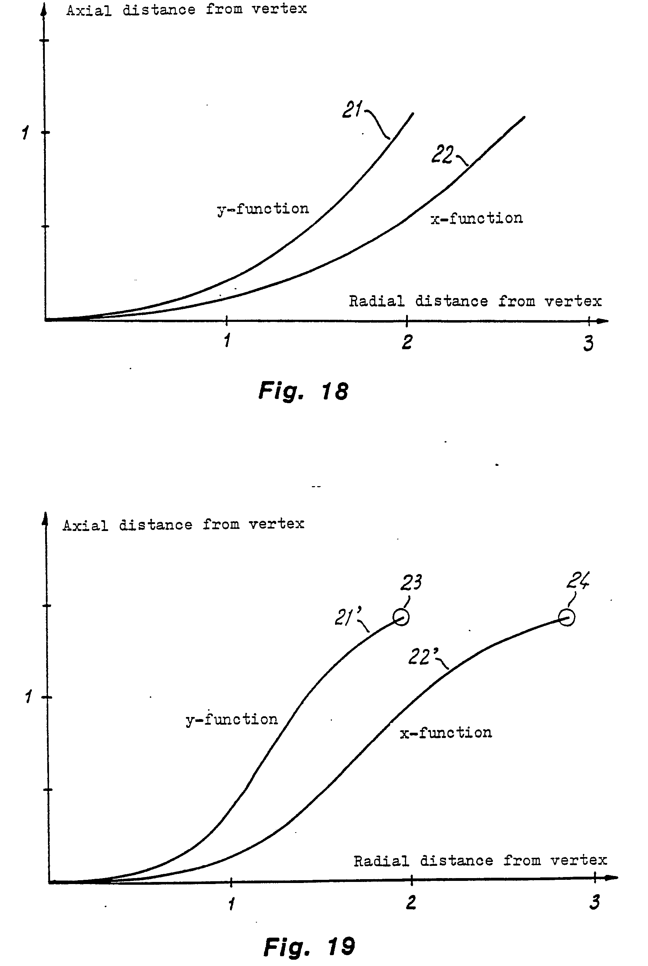

Figure 2b shows the surface of a lens or elementary lens of 0th order in accordance with the above embodiment type A. Figure 3a shows a horizontal projection of the elementary lens surface in figure 2 viewed in the plane of the lens, and figures 3b and 3c show horizontal bulgings of the same elementary lens surface in the x-plane and in the y-plane. Figures 4a, b and c show in the same way as figure 3 three different horizontal projections of an elementary lens surface of 1st order in accordance with type B as described above, and figure 5 shows likewise in the same way three different horizontal projections of an elementary lens surface of 3rd order in accordance with the said type C. Figure 6 shows an axial section through a traffic signal provided with a lens in accordance with the invention. Figures 7, 8 and 9 show different possible embodiments and distributions of elementary lenses within the inner surface of the lens. Figure 10 shows a section through a small part of a lens of concave type viewed along the line x-x in figure 9, and figure 11 shows a plan view from within the lens in figure 10. Figure 12 shows in schematic form the path of the rays through the lens in figures 10–11 with one of the numerous cavities in the vertical plane, and figure 13 shows in corresponding manner the path of the rays through the cavity viewed in the horizontal plane. The figures 14 and 15 show in the same way as figures 12 and 13 the path of rays through a convex elementary lens intended for traffic lights. Figures 16 and 17 show two different alternative embodiments of negative or positive lenses or elementary lenses according to the invention. Figures 18 and 19 show curves corresponding to the form of the y-function or x-function, respectively with atoric surfaces of the 0th respective 1st order.

The special type of light diffusion required with a traffic light as discussed above and illustrated in figure 1 makes great demands on the lens, and a lens suitable for this purpose is provided with a large number of elementary lenses which cooperate so as to produce the required light refraction. An example of an elementary lens surface of concave or convex form is shown in figure 2. This lens surface forms a two-axis aspheric toroidal surface of concave form, which according to the above definition is designated in the present context as an «atoric surface». The longitudinal axis or large axis is designated as the axis x-x and the small axis or short axis is designated as the axis y-y. The cavities may be impressed or cast on the inside of the lens or possibly the outside with the x-axis of the elementary lens surface extending in the calculated vertical direction of the lens, with the y-axis of the lens surface extending in the calculated horizontal direction of the lens. As indicated in figures 7, 8, 9 and 11 the cavities can be arranged in different ways within the lens, and they can be designed in different sizes and located at different distances from one another depending on the required effect.

In figures 2, 3, 4 and 5 the calotte base is designated with the number 2, the atoric surface with 3, the transversely cut upper edge with 4, the vertex with 5, the atoric y-function with 11 and the atoric x-function with 12.

Every cavity or projection according to figure 2 constitutes an atoric surface of the 1st or Oth order, designated according to the above definition as an atoric calotte surface. Such an atoric calotte surface is characterised in that it has two planes of symmetry, i.e. x-x and y-y, and in that all sections (p-plane) parallel to the vertex consist of ellipses (p-ellipses). Calotte surface 1 is bounded by a base surface or calotte base 2, a back or calotte surface 3 and a substantially transversely cut upper edge 4. In the example shown, where the atoric surface is calculated for a traffic light the light pattern of which is shown in figure 1 and where the light refraction in an upward direction is to be at a minimum surface 3 is cut at vertex 5 of the surface. So as to enable a simple, tight and effective arrangement of the cavities these can be designed with a substantially hexagonal base surface but they can also be provided inscribed within a square, rectangle or circle or impressed or cast in the surface of the lens quite independently from one another as indicated in figure 11.

The illustrated atoric calotte surface 1 is so designed that the calotte base 2 has a semi-elliptical projected surface, each section in the surface parallel to vertex 5 and calotte base 2 forming an ellipse. The atoric surface is so calculated that its x-function corresponds to the above formula 1.

The cavity being designed in this manner one obtains a visible light-emitting zone 6 in each elementary lens formed by the cavity or projection, the intensity of the light ostensibly differing when viewed in different directions in relation to the optical axis of the lens. Viewed from above the intensity of light is small, its maximum value being along the optical axis of the cavity at right angles to vertex 5, and it decreases gradually and in a predetermined manner outward in all directions from the optical axis. The intensity of the light decreases at a higher rate in the downward direction than towards the sides and it has its minimum value in the upward direction.

Within the elementary lenses optical light refraction occurs, causing the light-emitting zone 6 in every elementary lens 7 to apparently change position as the viewer steps back from the optical axis, i.e. as a function of the viewing angle, and the light-emitting zone 6 does not entirely disappear from view before the viewer is outside the actual range of visibility.

In order to achieve a special effect the aspheric surface can be designed as shown in figure 4. In this case the atoric surface is of the 1st order, and it will be seen that the transverse back line, i.e. the y-plane has a double curvature so that emanating from an inflexion point 8 on either side of the vertex it forms a convex part of the elementary lens cavity. As a result it is possible to observe from certain side angles two light zones in every elementary lens thus achieving a tighter light pattern.

It is also possible to achieve at certain angles in respect of the optical axis more than two light-emitting zones, by using atoric surfaces of the 2nd or a higher order. An atoric surface of the 2nd order designed with two inflexion zones may entail excessively large angles in relation to the calotte base at the edge of the base, in which case undesirable interference between adjacent atoric surfaces may occur with concave elementary lenses, this design being accordingly less suitable. Figure 5 shows a more advantageous embodiment, where the surface is of the 3rd order and so designed that the axial intersection lines have three inflexion zones at either side of the vertex, and such a surface will at certain angles possess up to four light-emitting zones for each elementary lens.

Figure 12 shows in schematic manner the path of rays in the vertical plane through a concave elementary lens in accordance with figures 10 and 11. It will be seen that the elementary lens does not refract any light rays in the upward direction but that the rays nearest to the upper edge of the toric surface pass substantially unrefracted and that the remaining parallel incident rays are refracted in directions downward from the horizontal plane as they pass through the lens.

Figure 13 shows how the rays in the horizontal plane are refracted in the manner of a fan. As can be seen in figure 1 the light intensity declines in a predetermined manner from a maximum value at an angle of 0–5° down to about 15–7,5% light intensity at an angle of 30° at either side of the optical horizontal axis.

Figures 16 and 17 show two alternative embodiments of a lens or an elementary lens in accordance with the invention, intended to produce light diffusion substantially only within a quadrant, i.e. in the case of concave lenses in the quadrants from the horizontal plane and downward, i.e. in figure 16 between 270° and 360° and in figure 17 in the zone between angles 180° and 270°. With convex lens surfaces the light diffusion is opposite, i.e. in figure 16 in the zone between 90° and 180° and in figure 17 in the zone between 0° and 90°.

Figures 18 and 19 show the principal forms of the optimal y- and x-functions of atoric surfaces of the Oth order or 1st order, respectively. The y-function is designated with 21 or 21′, respectively, and the x-function with 22 or 22′, respectively. As regards figure 19 it should be noted that the inclinations at the edge points 23 of the y-function or 24 of the x-function should preferably be such that the viewing angle is between 3 and 8°. The inclination can be calculated from formula 2 on page 5.

It is quite possible to combine concave and convex atoric surfaces in the lens surface in order to produce special effects and the concave and convex elementary lens surfaces can be arranged alternately or so that arranged in pairs, three by three etc. they form angle formations, optical text or pictorial symbols and similar effects.

Even though the above description has dealt mainly with optical systems having a large number of elementary lenses of atoric type it will be obvious to any specialist that for certain purposes use can also be made of a single atoric lens, and the invention covers also this possibility.

**Claims**

1. A light-refracting lens for use with optical apparatus in which the intensity of the refracted light varies with the refractive angle and is different in two orthogonal planes comprising the optical axis, and in which a light source projects a beam of rays towards the lens so that one or several images of the light source is formed by the lens, especially so that the refracted light is concentrated within a predetermined angular zone, and in which the lens on one side thereof is formed with one or several non-rotational symmetric calotte-shaped cavities and/or bulgings forming one or more elementary lenses (7) each of which provides one or several light-emitting zones (6, 9), characterized in that the calotte-shaped cavities and/or bulgings are designed as complete or partial two-axis aspheric toroidal calottes, and in that the ratio between the extent of the calotte base (2) along the large axis (x-x) and along the small axis (y-y) is about 1.3–1.5.

2. A lens in accordance with claim 1, characterized in that the calotte height has a value corresponding to about 0.2–0.5 or preferably 0.25–0.30 of the extent along the small axis (y-y) of the calotte base.

3. A lens in accordance with claim 1 or 2, characterized in that the inclination ($\alpha'$) at the edge points for the y-functions (23), defining the intersections between the 1-plane and the lens, is expressed by the formula:

$$\alpha' = \pm \arctg \frac{(\sin \beta')}{n : \cos(\arcsin (\sin \beta')/n) - 1}$$

in which $\beta'$ is the refractive angle in the vicinity of the intersection of the 1-plane and the lens edge, and where the absolute value of the angle $\beta'$ is preferably within the range 3–8°, and n is the index of refraction of the lens material whereby the relationship between the minimum inclination of the line of intersection with the plane where the refraction is the lowest (s-plane) and the maximum inclination of the line of intersection with the 1-plane is about 0.7–0.8.

4. A lens in accordance with any of claims 1–3, characterized in that every elementary lens surface consists, wholly or partially, of atoric calottes of the 0-th order (without inflexion zones).

5. A lens in accordance with any of claims 1–3, characterized in that every elementary lens surface consists of atoric surfaces of the 1st order with one inflexion zone.

6. A lens in accordance with any of claims 1–3, characterized in that every elementary surface consists, wholly or partially, of an atoric surface such that the intersection of the surface with the s-plane (x-x) has one inflexion zone, whereas the intersection of the surface with the 1-plane (y-y) has no inflexion zone.

7. A lens in accordance with any of claims 1–3, characterized in that every elementary surface consists, wholly or partially, of atoric surfaces such that the intersection of the surface with the s-plane (x-x) has no inflexion zone, whereas the intersection of the surface with the 1-plane (y-y) has one inflexion zone.

8. A lens in accordance with any of claims 1–3, characterized in that every elementary lens surface consists, wholly or partially of atoric surfaces of the 2nd order with two inflexion zones.

9. A lens in accordance with any of claims 1–3, characterized in that every lens surface consists, wholly or partially, of atoric surfaces of the 3rd order with three inflexion zones.

10. A lens in accordance with claim 9, characterized in that the surface has substantially one y-function (21) and one x-function (22) in accordance with the curves shown in figure 18.

11. A lens in accordance with claim 5, characterized in that the surface has substantially one y-function (21') and one x-function (22') in accordance with the curves shown in figure 19.

12. A lens in accordance with claim 1 intended for refracting light only on that one side of a plane (referred to as the light half-plane) comprising the optical axis of the arrangement, e.g. for use in traffic signals, characterized in that use is made substantially of half a section of atoric calottes which, if the lens or elementary lens is concave (impressed), are located in the half-plane through the vertex (5) of the calotte which is a translation equivalent of the said light half-plane and which, if the lens or elementary lens is convex (projecting), is located in the half-plane through vertex (5) of the calotte which is the translation equivalent of the half-plane opposite to the light half-plane.

13. A lens in accordance with claim 11, characterized in that the light half-plane is the plane below the horizontal line and in that the s-plane (x-x) is vertical (figures 12–15).

14. A lens in accordance with any of claims 1–11 for refracting light substantially only within a quadrant (subsequently referred to as the light quadrant) relative to the optical axis of the arrangement, e.g. for use in traffic signals, characterized in that use is made of substantially quadrant sections of atoric calottes, which, if the lens or elementary lens is concave, is the translation equivalent of the light quadrant and if the lens or elementary lens is convex is the translation equivalent of the quadrant opposite to the light quadrant (figures 16 and 17).

15. Lens in accordance with claim 14, characterized in that the light quadrant consists of either the left or the right quadrant below the horizontal line, and in that the s-plane (x-x) is either vertical or horizontal.

16. Lens in accordance with any of the above claims, characterized in that the atoric calotte of the lens or elementary lens is so orientated that the tangential plane at the vertex (5) of the calotte is substantially parallel to the tangential plane of the surface of the optical arrangement, which can be flat or curved.

17. A lens in accordance with any of claims 1–15, characterized in that every atoric calotte is orientated so that the tangential plane at vertex (5) of the calotte is substantially parallel to the tangential plane at the optical axis of the surface of the optical arrangement, which can be flat or curved.

## Patentansprüche

1. Lichtbrechende Linse für eine optische Einrichtung, bei der die Intensität des gebrochenen Lichts sich mit dem Brechungswinkel ändert und in zwei entlang der optischen Achse verlaufenden orthogonalen Ebenen unterschiedlich ist, bei der eine Lichtquelle ein Strahlbündel auf die Linse projiziert, so dass durch die Linse ein oder mehrere Bilder der Lichtquelle entstehen, insbesondere so, dass das gebrochene Licht innerhalb eines vorbestimmten Winkelbereichs konzentriert wird, und bei der die Linse auf einer Seite der die mit einer oder mehreren nicht rotationssymmetrischen kalottenförmigen Ein- und/oder Ausbuchtungen versehen ist, die eine oder mehrere Elementarlinsen (7) bilden, von denen jede eine oder mehrere lichtemittierende Zonen (6, 9) aufweist, dadurch gekennzeichnet, dass die kalottenförmigen Ein- und/oder Ausbuchtungen als vollständige oder teilweise zweiachsige asphärische toroidische Kalotten ausgebildet sind und dass das Verhältnis zwischen den Längen der Kalottenbasis (2) in Richtung der langen Achse (x-x) und in Richtung der kurzen Achse (y-y) etwa 1.3 bis 1.5 beträgt.

2. Linse nach Anspruch 1, dadurch gekennzeichnet, dass die Kalottenhöhe einen Wert von etwa 0.2 bis 0.5 oder vorzugsweise 0.25 bis 0.30 mal der Länge der Kalottenbasis in Richtung der kurzen Achse (y-y) hat.

3. Linse nach Anspruch 1 oder 2, dadurch gekennzeichnet, dass die Inklination (α') an den Randpunkten der y-Funktion (23), die die Schnitte zwischen der 1-Ebene und der Linse definiert, durch die Formel ausgedrückt wird:

$$\alpha' = \pm \arctan \frac{(\sin \beta')}{n : \cos(\arcsin(\sin \beta')/n) - 1}$$

wobei β' den Brechungswinkel in der Nähe des Schnitts zwischen 1-Ebene und Linsenkante bedeutet, und wobei der Absolutwert des Winkels β' vorzugsweise im Bereich zwischen 3 und 8° liegt, n den Brechungsindex des Linsenmaterials bedeutet, wobei das Verhältnis zwischen der minimalen Inklination der Schnittlinie mit der Ebene, wo die Brechung am geringsten ist (s-Ebene), und der maximalen Inklination der Schnittlinie mit der 1-Ebene etwa 0.7 bis 0.8 beträgt.

4. Linse nach einem der Ansprüche 1 bis 3, dadurch gekennzeichnet, dass jede Elementarlinsenoberfläche ganz oder teilweise aus atorischen Kalotten der nullten Ordnung (ohne Wendebereiche) besteht.

5. Linse nach einem der Ansprüche 1 bis 3, dadurch gekennzeichnet, dass jede Elementarlinsenoberfläche aus atorischen Oberflächen der ersten Ordnung mit einem Wendebereich besteht.

6. Linse nach einem der Ansprüche 1 bis 3, dadurch gekennzeichnet, dass jede Elementarlinsenoberfläche ganz oder teilweise so aus einer atorischen Oberfläche besteht, dass der Schnitt der Oberfläche mit der s-Ebene (x-x) einen Wendebereich aufweist, während der Schnitt der Oberfläche mit der 1-Ebene (y-y) keinen Wendebereich hat.

7. Linse nach einem der Ansprüche 1 bis 3, dadurch gekennzeichnet, dass jede Elementaroberfläche in der Weise ganz oder teilweise aus atorischen Oberflächen besteht, dass der Schnitt der Oberfläche mit der s-Ebene (x-x) keinen Wendebereich, der Schnitt der Oberfläche mit der 1-Ebene (y-y) aber einen Wendebereich aufweist.

8. Linse nach einem der Ansprüche 1 bis 3, dadurch gekennzeichnet, dass jede Elementarlinsenoberfläche ganz oder teilweise aus atorischen Oberflächen der zweiten Ordnung mit zwei Wendebereichen besteht.

9. Linse nach einem der Ansprüche 1 bis 3, dadurch gekennzeichnet, dass jede Linsenoberfläche ganz oder teilweise aus atorischen Oberflächen der dritten Ordnung mit drei Wendebereichen besteht.

10. Linse nach Anspruch 9, dadurch gekennzeichnet, dass die Oberfläche im wesentlichen eine y-Funktion (21) und eine x-Funktion (22) in Übereinstimmung mit den in Fig. 18 gezeigten Kurven aufweist.

11. Linse nach Anspruch 5, dadurch gekennzeichnet, dass die Oberfläche im wesentlichen eine y-Funktion (21') und eine x-Funktion (22') in Übereinstimmung mit den in Fig. 19 gezeigten Kurven aufweist.

12. Linse nach Anspruch 1 zur Brechung von Licht nur auf der einen Seite einer Ebene (als Lichthalbebene bezeichnet), die die optische Achse der Anordnung enthält, zum Beispiel zur Verwendung in Verkehrssignalen, dadurch gekennzeichnet, dass im wesentlichen halbe Abschnitte von atorischen Kalotten verwendet werden, die, wenn die Linse oder Elementarlinse konkav (einspringend) ist, in der Halbebene durch den Scheitel (5) der Kalotte angeordnet sind, die eine zur Lichthalbebene äquivalente Translation darstellt, und die, wenn die Linse oder Elementarlinse konvex ist (vorspringend) in der Halbebene durch den Scheitel (5) der Kalotte angeordnet ist, die die Translation äquivalent zur Halbebene gegenüber der Lichthalbebene ist.

13. Linse nach Anspruch 11, dadurch gekennzeichnet, dass die Lichthalbebene die Ebene unterhalb der Horizontallinie ist und dass die s-Ebene (x-x) vertikal verläuft (Fig. 12–15).

14. Linse nach einem der Ansprüche 1 bis 11 zur Brechung von Licht im wesentlichen nur innerhalb eines Quadranten (im weiteren als Lichtquadrant bezeichnet) in bezug auf die optische Achse der Anordnung, zum Beispiel zur Verwendung in Verkehrssignalen, dadurch gekennzeichnet, dass im wesentlichen Quadrantensektoren atorischer Kalotten verwendet werden, was, wenn die Linse oder Elementarlinse konkav ist, das Übertragungsäquivalent des Lichtquadranten ist, und wenn die Linse oder Elementarlinse konvex ist, das Übertragungsäquivalent des dem Lichtquadranten gegenüberliegenden Quadranten ist (Fig. 16 und 17).

15. Linse nach Anspruch 14, dadurch gekennzeichnet, dass der Lichtquadrant aus entweder dem linken oder rechten Quadranten unterhalb der Horizontallinie besteht, und dass die s-Ebene (x-x) entweder vertikal oder horizontal verläuft.

16. Linse nach einem der vorhergehenden Ansprüche, dadurch gekennzeichnet, dass die atorische Kalotte der Linse oder Elementarlinse so orientiert ist, dass die tangentiale Ebene am Scheitel (5) der Kalotten im wesentlichen parallel zu der tangentialen Ebene der Oberfläche der optischen Anordnung ist, die eben oder gewölbt sein kann.

17. Linse nach einem der Ansprüche 1 bis 15, dadurch gekennzeichnet, dass jede atorische Kalotte so orientiert ist, dass die tangentiale Ebene am Scheitel 5 der Kalotte im wesentlichen parallel zu der tangentialen Ebene an der optischen Achse der Oberfläche der optischen Anordnung ist, die eben oder gewölbt sein kann.

## Revendications

1. Lentille réfractant la lumière à utiliser avec un appareil optique dans lequel l'intensité de la lumière réfractée varie avec l'angle de réfraction et est différente dans deux plans orthogonaux contenant l'axe optique, et dans lequel une source de lumière projette un faisceau de rayons vers la lentille afin qu'une ou plusieurs images de la source de lumière soient formées par la lentille, en particulier de manière que la lumière réfractée soit concentrée dans une zone angulaire prédéterminée, et dans lequel la lentille, sur un premier de ses côtés, est formée de façon à présenter une ou plusieurs cavités et/ou protubérances en forme de calotte sans symétrie de rotation, formant une ou plusieurs lentilles élémentaires (7) présentant chacune une ou plusieurs zones (6, 9) d'émission de lumière, caractérisée en ce que les cavités et/ou protubérances en forme de calotte sont conçues sous la forme de calottes toroïdales asphériques complètes ou partielles à deux axes, et en ce que le rapport de l'étendue de la base (2) de la calotte le long du grand axe (x-x) et de l'étendue le long du petit axe (y-y) est d'environ 1,3-1,5.

2. Lentille selon la revendication 1, caractérisée en ce que la hauteur de la calotte possède une valeur correspondant à environ 0,2-0,5 ou de préférence 0,25-0,30 fois l'étendue le long du petit axe (y-y) de la base de la calotte.

3. Lentille selon la revendication 1 ou 2, caractérisée en ce que l'inclinaison ($\alpha'$) aux points d'arête pour les fonctions y (23), définissant les intersections entre le plan 1 et la lentille, est exprimée par la formule:

$$\alpha' = \pm \operatorname{arctg} \frac{(\sin \beta')}{n\,\pi \cdot \cos(\arcsin(\sin \beta')/n) - 1}$$

dans laquelle $\beta'$ est l'angle de réfraction au voisinage de l'intersection du plan 1 et du bord de la lentille, et où la valeur absolue de l'angle $\beta'$ est avantageusement comprise dans la plage de 3-8°, et n est l'indice de réfraction de la matière de la lentille, de façon que la relation entre l'inclinaison minimale de la ligne d'intersection avec le plan où la réfraction est la plus basse (plan s) et l'inclinaison maximale de la ligne d'intersection avec le plan 1 soit d'environ 0,7-0,8.

4. Lentille selon l'une quelconque des revendications 1-3, caractérisée en ce que chaque surface de lentille élémentaire est constituée, en totalité ou partiellement, de calottes atoriques d'ordre 0 (sans zones d'inflexion).

5. Lentille selon l'une quelconque des revendications 1-3, caractérisée en ce que chaque surface de lentille élémentaire est constituée de surfaces atoriques du premier ordre, avec une zone d'inflexion.

6. Lentille selon l'une quelconque des revendications 1-3, caractérisée en ce que chaque surface élémentaire est constituée, totalement ou partiellement, d'une surface atorique telle que l'intersection de la surface avec le plan s (x-x) possède une zone d'inflexion, alors que l'intersection de la surface avec le plan 1 (y-y) ne possède pas de zone d'inflexion.

7. Lentille selon l'une quelconque des revendications 1-3, caractérisée en ce que chaque surface élémentaire est constituée, totalement ou partiellement, de surfaces atoriques telles que l'intersection de la surface avec le plan s (x-x) ne possède pas de zone d'inflexion, alors qu'à l'intersection de la surface avec le plan 1 (y-y) possède une zone d'inflexion.

8. Lentille selon l'une quelconque des revendications 1-3, caractérisée en ce que chaque surface de lentille élémentaire est constituée, totalement ou partiellement, de surfaces atoriques du deuxième ordre avec deux zones d'inflexion.

9. Lentille selon l'une quelconque des revendications 1-3, caractérisée en ce que chaque surface de lentille est constituée, totalement ou partiellement, de surfaces atoriques du troisième ordre avec trois zones d'inflexion.

10. Lentille selon la revendication 9, caractérisée en ce que la surface possède sensiblement une fonction y (21) et une fonction x (22) conformément aux courbes montrées sur la figure 18.

11. Lentille selon la revendication 5, caractérisée en ce que la surface possède sensiblement une fonction y (21') et une fonction x (22') conformément aux courbes montrées sur la figure 19.

12. Lentille selon la revendication 1, destinée à réfracter la lumière uniquement du côté d'un plan (appelé le demi-plan de lumière) contenant l'axe optique de l'agencement, par exemple pour une utilisation dans des feux de circulation, caractérisée en ce qu'il est utilisé sensiblement la moitié d'une section de calottes atoriques, qui, si la lentille ou la lentille élémentaire est concave (en creux), se trouve dans le demi-plan passant par le sommet (5) de la calotte qui est une translation équivalente dudit demi-plan de lumière et qui, si la lentille ou la lentille élémentaire est convexe (en saillie), se trouve dans le demi-plan passant par le sommet (5) de la calotte qui est l'équivalent en translation de demi-plan opposé au demi-plan de la lumière.

13. Lentille selon la revendication 11, caractérisée en ce que le demi-plan de la lumière est le plan au-dessous de la ligne horizontale et en ce que le plan s (x-x) est vertical (figures 12–15).

14. Lentille selon l'une quelconque des revendications 1–11, destinée à réfracter de la lumière sensiblement uniquement à l'intérieur d'un quadrant (appelé ci-après le quadrant de la lumière) par rapport à l'axe optique de l'agencement, par exemple pour une utilisation dans des feux de circulation, caractérisée en ce qu'il est utilisé des sections sensiblement en quadrant de calottes atoriques qui, si la lentille ou la lentille élémentaire est concave, constituent l'équivalent en translation du quadrant de la lumière et, si la lentille ou la lentille élémentaire est convexe, constituent l'équivalent en translation du quadrant opposé au quadrant de la lumière (figures 16 et 17). .

15. Lentille selon la revendication 14, caractérisée en ce que le quadrant de la lumière est constitué du quadrant soit de gauche, soit de droite au-dessous de la ligne horizontale, et en ce que le plan s (x-x) est soit vertical, soit horizontal.

16. Lentille selon l'une quelconque des revendications précédentes, caractérisée en ce que la calotte atorique de la lentille ou de la lentille élémentaire est orientée de façon que le plan tangentiel au sommet (5) de la calotte soit sensiblement parallèle au plan tangentiel de la surface de l'agencement optique, qui peut être plat ou arrondi.

17. Lentille selon l'une quelconque des revendications 1–15, caractérisée en ce que chaque calotte atorique est orientée de façon que le plan tangentiel au sommet (5) de la calotte soit sensiblement parallèle au plan tangentiel à l'axe optique de la surface de l'agencement optique, qui peut être plat ou arrondi.

1/7

**Fig. 1**

**Fig. 2a**

**Fig. 2b**

**Fig. 3**

11

a

23

8                11        8

v

**Fig. 4**

5  12  3   1'
4        8              24
b        2

a

11
8
8       8
v

5  12
8  3   1''
4        8
b     2

**Fig. 5**

Fig. 6

Fig. 7

**Fig. 8**

**Fig. 9**

Fig. 10

Fig. 11

Fig. 12

Fig. 13

**Fig. 14**

**Fig. 15**

**Fig. 16**

**Fig. 17**

**Fig. 18**

**Fig. 19**

23